# EUROPÄISCHE PATENTANMELDUNG

(11) **EP 3 165 269 A1**
(43) Veröffentlichungstag der Anmeldung: **10.05.2017**
(21) Anmeldenummer: 16002272.9
(22) Anmeldetag: 25.10.2016
(51) Int. Cl.: B01D 35/04, B05B 1/18, B01D 61/18, B01D 63/06, B01D 61/20

(54) **ALS AUSLAUFMUNDSTÜCK AUSGEBILDETER WASSERFILTER**

(30) Priorität: 06.11.2015 DE 202015007657 U
(71) Anmelder: Ruscho-Schotenröhr GmbH, 58642 Iserlohn (DE)
(72) Erfinder: Henschel, Dietmar, 58642 Iserlohn (DE)
(74) Vertreter: Gallo, Wolfgang

(57) **Zusammenfassung**

Als Auslaufmundstück ausgebildeter Wasserfilter, mit einem Gehäuse (1, 2) und einem darin einsetzbaren Filtereinsatz (3) mit Ultrafiltrationsfunktion, wobei der Filtereinsatz (3) aus einem Trägerkörper aus porösem Keramikmaterial besteht, der auf seiner Wasserzulaufseite mit seine den zuströmenden Wasser ausgesetzte Oberfläche vergrößernden Formationen ausgebildet ist und diese vergrößerte Oberfläche mit einer darauf aufgebrachten Filtermembran beschichtet ist, deren Filterporengröße deutlich kleiner als die Porengröße des keramischen Trägermaterials ist.

## Beschreibung

Die Erfindung betrifft einen als Auslaufmundstück ausgebildeten Wasserfilter mit Ultrafiltrationsfunktion zur Verwendung als finales Endglied an Sanitärarmaturen und Getränkeautomaten.

Es ist wünschenswert, Wasser an einem Wasserauslauf so zu filtern, dass Mikroorganismen gebunden und zurückgehalten werden können. Dabei ist es weiter wünschenswert, die Baugröße eines derartigen Filters ist einem Wasserauslaufmundstück möglichst klein zu halten.

Aus der EP 0 539 069 A2 ist ein Wasserauslauf mit eingebautem Mikrobenfilter bekannt. In einem zylindrischen Filtergehäuse ist eine Filterpackung in Gestalt einer spiralförmig aufgewickelten Ultrafiltermembran um ein mittiges Auslaßrohr herum angeordnet, so dass Wasser von außen durch die Filterpackung und durch radiale Öffnungen in dem Auslaßrohr in das Auslaß eintreten können.

Aus der DE 20 2014 101 851 U1 ist eine Wasserauslaufarmatur mit eingebautem Filter zum Anschließen an einen Wasserauslauf bekannt. Dort ist in einem rohrförmigem Filtergehäuse ein zum Binden von Mikroorganismen geeigneter Filter in Gestalt eines Filterkörpers aus mikroporösem Filtermaterial eingesetzt, wobei eine elektrische Heizeinrichtung zum Erhitzen des Filters zum Zwecke des Abtötens von gebundenen Mikroorganismen vorgesehen ist.

Aufgabe der Erfindung ist es, ein Auslaufmundstück mit einem Ultrafiltrations-Wasserfilter zu schaffen, der sowohl hinsichtlich der Baumaße als auch der Fertigungskosten als auch der Handhabung besonders vorteilhaft ist.

Diese Aufgabe wird gemäß der Erfindung durch die im Anspruch 1 angegebene Anordnung gelöst. Vorteilhafte Ausgestaltungen und Weiterbildungen der Erfindung sind Gegenstand der Unteransprüche.

Erfindungsgemäß besteht der als Auslaufmundstück ausgebildete Wasserfilter aus einem Gehäuse, das einen Filtereinsatz aufnimmt, und der mit seiner Wasserzuflußseite an einer Wasserauslaufarmatur ein- oder anschraubbar ist. Der Filtereinsatz besteht aus einem porösem keramischen Trägerkörper, der mit Formationen zur Vergrößerung seiner Oberfläche ausgebildet ist und dessen Oberfläche auf der Wasserzuflußseite mittels einer Filtermembran bedeckt ist, welche die eigentliche Ultrafiltrationsfunktion wahrnimmt.

Der Filtereinsatz ist im Gehäuse leicht zugänglich und bei Bedarf leicht austauschbar.

Weitere Einzelheiten der Erfindung werden nachstehend anhand von Ausführungsbeispielen unter Bezugnahme auf die anliegenden Zeichnungen näher erläutert. In den Zeichnungen zeigt:
- Fig. 1: einen als Auslaufmundstück ausgebildeten Wasserfilter nach der Erfindung im Axialschnitt,
- Fig. 2: eine alternative Ausführungsform eines Was serfilters mit seitlich angeordnetem Wasser auslaß,
- Fig. 3: eine Draufsicht auf den Filtereinsatz der Anordnung nach den Fig. 1 oder 2, und
- Fig. 4: einen Schnitt durch den Filtereinsatz längs der Schnittlinie A-A in Fig. 3.

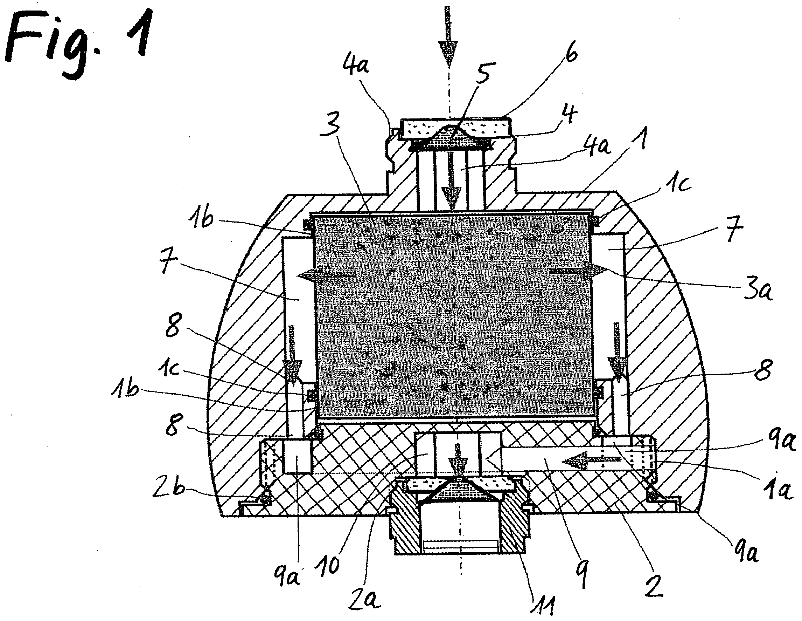

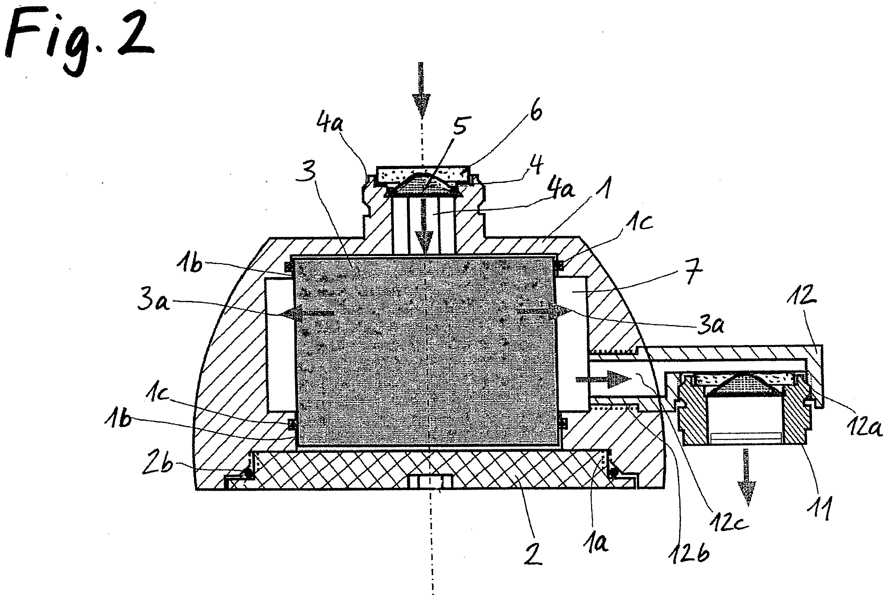

Die Fig. 1 und 2 zeigen jeweils im Axialschnitt eine Ausführungsform eines als Auslaufmundstück ausgebildeten Wasserfilters nach der Erfindung, wobei bei der Ausführungsform nach Fig. 1 der Wasserauslauf konzentrisch mit dem Wassereinlauf angeordnet ist, und bei der Ausführungsform nach Fig. 2 der Wasserauslauf seitlich angeordnet ist, um die Bauhöhe zu minimieren.

Bei beiden Ausführungsformen weist der Wasserfilter ein Gehäuse 1 mit einem in ein Gewinde 1a eingeschraubten unteren Deckel 2 auf. Innerhalb des Gehäuses 1 ist eine Filterkammer gebildet, die in Filtereinsatz 3 in Gestalt eines Filterblocks eingesetzt ist. Das Gehäuse 1 weist oben einen Anschlußstutzen 4 mit einem Einlaßkanal 4a auf, der bei den Ausführungsbeispielen mit einem Außengewinde 4a zum Einschrauben in ein entsprechendes Gewinde eines Wasserauslaufs einer Sanitärarmatur oder dgl. ausgebildet ist. In die Einlaßöffnung des Anschlußstutzens 4 ist ein Schmutzfangsieb 5 eingesetzt, und es ist dort ein Dichtungsring 6 vorgesehen.

Wie in den Fig. 1 und 2 sichtbar ist, ist innerhalb des Gehäuses 1 zwischen diesem und dem eingesetzten Filtereinsatz 3 jeweils eine Ringkammer 7 gebildet, in die gefiltertes Wasser, das durch den Anschlußstutzen 4 von oben in den Filtereinsatz 3 einströmt und nach radialem Durchströmen (Pfeile 3a) des Filtereinsatzes 3 aus diesem austritt. Aus dieser Ringkammer 7 gelangt das gefilterte Wasser durch axiale Bohrungen 8 im Gehäuse 1 und durch damit in Verbindung stehende radiale Bohrungen 9 mit Einlässen 9a im Deckel 2 in eine im Deckel gebildete Auslaßkammer 10, aus der das gefilterte Wasser dann durch einen von unten in ein Gewinde 2a des Deckels 2 eingeschraubten Strahlregler 11 oder ein sonstiges Auslaufelement austritt. Der Filtereinsatz ist im Gehäuse 1 durch Bohrungsbereiche 1b zentriert und mit O-Ringen 1c abgedichtet. O-Ringe 2b dichten den Deckel 2 im Gehäuse 1 ab.

Bei der Ausführungsform nach Fig. 2 ist der Strahlregler 11 in einen seitlich am Gehäuse montierten Ansatz 12 mittels eines Gewindes 12a eingeschraubt, der mit der Ringkammer 7 in durch einen in einem Hals 12b gebildeten Kanal 12c in Verbindung steht.

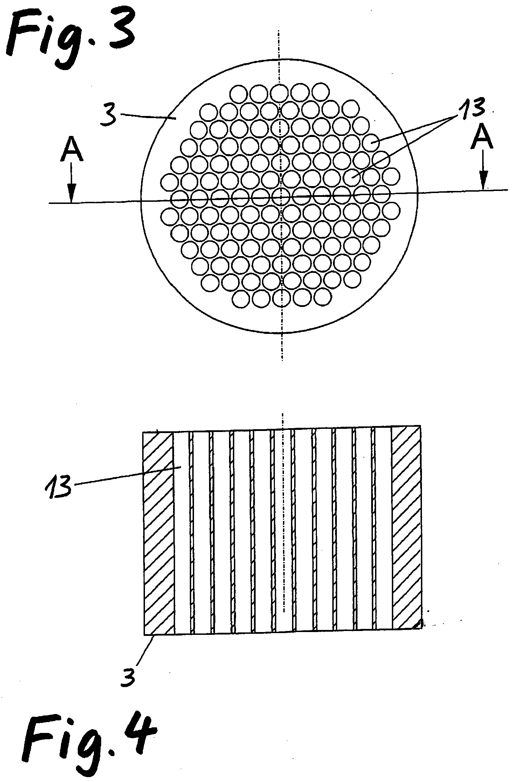

Der Filtereinsatz 3 ist in den Fig. 3 und 4 mehr im einzelnen dargestellt. Der Filtereinsatz 3 besteht aus einem keramischen Trägerkörper, der porös ausgebildet ist, damit das zu filternde Wasser durch den porösen Trägerkörper hindurchströmen kann. Wassereinlaufseitig ist dieser keramische Trägerkörper mit Formationen ausgebildet, die seine wirksame, dem zuströmenden Wasser ausgesetzte Oberfläche deutlich vergrößern, und diese vergrößerte, dem zuströmenden Wasser ausgesetzte Oberfläche des keramischen Trägerkörpers ist mit einer Filtermembran beschichtet, welche die eigentliche Filtrationsfunktion wahrnimmt, und deren Poren dementsprechend bedeutend kleiner sind als die Poren des keramischen Tägerkörpers.

Fig. 3 zeigt den Filtereinsatz 3 in Draufsicht, wo ersichtlich ist, dass der aus einem porösen keramischen Material bestehende Trägerkörper von einer Vielzahl von Bohrungen 13 durchsetzt ist, die geringe Abstände voneinander haben. Die Wände der Bohrungen 13 sind mit der Membranbeschichtung ausgekleidet. In Fig. 4 sind diese Bohrungen 13 im Axialschnitt sichtbar. Sie können als Durchgangsbohrungen oder als Sackbohrungen ausgebildet sein.

Diese Ausgestaltung des Filtereinsatzes 3 erzeugt eine große Filterfläche, so dass pro Zeiteinheit ein relativ großes Wasservolumen gefiltert werden kann. Hierbei spielt die Anzahl der durch die Bohrungen 13 gebildeten Kanäle im Verhältnis zu ihrem Durchmesser sowie die Porengröße der Filtermembran und des Keramikträgermaterials eine Rolle. Zweckmäßigerweise wird das zu filternde Wasser von innen nach außen durch den Filtereinsatz 3 geleitet, obwohl auch eine umgekehrte Richtung von außen nach innen möglich wäre. Dies ist aber ungünstig, da dann die Filtermembranbeschichtung auf der Außenseite des Filterkörpers aufgebracht sein müßte und eine selbst bei Auflösung des Trägerkörperumfangs in eine Vielzahl benachbarter und durch Einschnitte getrennter Rippen oder dergleichen eine kleinere Oberfläche zur Verfügung stünde.

Der Trägerkörper des Filtereinsatzes 3 besteht vorzugsweise aus poröser Aluminiumoxidkeramik. Die Filtermembranbeschichtung besteht vorzugsweise aus gesintertem Aluminiumoxid. Sie kann hergestellt werden, indem eine Aluminiumoxidsuspension im Schlickerverfahren in die Bohrungen 13 eingetragen wird, wodurch es aufgrund von Adsorptionskräften zur Ausbildung einer Membranschicht auf den Bohrungswänden kommt. Nach Bildung der Membranschicht wird überflüssige Aluminiumoxidsuspension abgelassen. Die gebildete Aluminiumoxidbeschichtung wird getrocknet und danach im Sinterverfahren ausgehärtet. Es bildet sich so eine Filtermembranschicht mit geringer Porengröße, wohingegen der Trägerkörper mit seiner größeren Porengröße nur als Trägerelement für die Filtermembranbeschichtung dient und aufgrund seiner höheren Durchlässigkeit der Wasserströmung nur einen wesentlich geringeren Widerstand entgegensetzt als die Filtermembranbeschichtung.

Der Trägerkörper des Filtereinsatzes 3 ist an seinen nicht für den Austritt von gefiltertem Wasser vorgesehenen wasseraustrittsseitigen Oberflächenbereichen vorzugsweise mit einer Sperrbeschichtung in Gestalt eines Sperrlacks wie eines Teflonlacks beschichtet.

Die Filterdurchsatzleistung der erfindungsgemäßen Anordnung ist im Vergleich zu herkömmlichen Filtern sehr gut und die Standzeit des Filters ist bemerkenswert groß. Außerdem ist der Filtereinsatz des erfindungsgemäßen Wasserfilters rückspülbar und dann wiederverwendbar. Durch Lösen des unteren Deckels 2 vom Gehäuse 1 kann der Filtereinsatz 3 herausgenommen und ersetzt oder rückgespült und gereinigt werden.

Keime, Bakterien und sogar Viren werden durch den Filtereinsatz 3 dauerhaft zurückgehalten; ein Durchwachsen ist nicht möglich.

Das Gehäuse mit allen seinen Teilen kann vorzugsweise mit keimabtötenden Mitteln wie beispielsweise Silberionen versetzt sein, wodurch auch bei stagnierendem Wasser das Abtöten von darin vorhandenen Keimen stattfindet, so dass stets das Austreten von keimfreiem Wasser gewährleistet ist.

Alle Keime, Bakterien und Viren werden von der Filtermembranbeschichtung der Bohrungswände der Bohrungen 13 zurückgehalten. Das durch die Filtermembranbeschichtung hindurch gelangende gefilterte Wasser gelangt weiter durch den porösen Trägerkörper in die Ringkammer 7 und von da aus zum Auslaß durch den Strahlregler oder sonstigen Auslauf.

## Patentansprüche

1. Als Auslaufmundstück ausgebildeter Wasserfilter, mit einem Gehäuse (1, 2) und einem darin einsetzbaren Filtereinsatz (3) mit Ultrafiltrationsfunktion, **dadurch gekennzeichnet, dass** der Filtereinsatz (3) aus einem Trägerkörper aus porösem Keramikmaterial besteht, der auf seiner Wasserzulaufseite mit seine den zuströmenden Wasser ausgesetzte Oberfläche vergrößernden Formationen ausgebildet ist und diese vergrößerte Oberfläche mit einer darauf aufgebrachten Filtermembran beschichtet ist, deren Filterporengröße deutlich kleiner als die Porengröße des keramischen Trägermaterials ist.

2. Filter nach Anspruch 1, wobei der Filtereinsatz als Filterblock ausgebildet ist, in welchen das zu filternde Wasser durch seine obere, einem Wassereinlaß des Gehäuses (1, 2) zugewandte Stirnseite eintritt, und durch welchen das zu filternde Wasser im wesentlichen radial auswärts hindurch in eine zwischen dem seitlichen Außenumfang des Filtereinsatzes und der Wand des Gehäuses (1) gebildete Ringkammer (7) strömt, aus welcher das gefilterte Wasser zu einem Auslaß (11) des Gehäuses gelangt.

3. Filter nach Anspruch 2, wobei der keramische Trägerkörper von einem Bündel paralleler Durchgangs- oder Sackbohrungen (13) durchsetzt ist, die zur Wassereinlaufseite offen sind, und deren Wandungen mit der Filtermembran beschichtet sind.

4. Filter nach einem der Ansprüche 1 bis 3, wobei der Trägerkörper des Filtereinsatzes (3) aus poröser Aluminiumoxidkeramik besteht.

5. Filter nach einem der Ansprüche 1 bis 4, wobei die Filtermembranbeschichtung aus auf der Oberfläche des Trägerkörpers gesintertem Aluminiumoxid besteht.

6. Filter nach Anspruch 5, wobei die Filtermembranschicht im Schlickerverfahren aus einer Aluminiumoxidsuspension auf die Oberfläche aufgebracht und dort gesintert ist.

7. Filter nach einem der Ansprüche 1 bis 6, wobei der Trägerkörper des Filtereinsatzes (3) an seinen nicht für den Austritt von gefiltertem Wasser vorgesehenen wasseraustrittsseitigen Außenflächenbereichen mit einer Sperrbeschichtung versehen ist.

8. Filter nach einem der Ansprüche 1 bis 7, wobei das Gehäuse einen unteren lösbaren Deckel (2) aufweist, bei dessen Abnehmen der Filtereinsatz (3) zugänglich ist.

9. Filter nach Anspruch 8, wobei ein Wasserauslauf aus dem Filter im Deckel (2) gebildet ist.

10. Filter nach Anspruch 8, wobei im Deckel (2) gebildete Känäle (9, 9a) den wasserauslaufseitigen Bereich des Filtereinsatzes (3) mit dem Wasserauslauf verbinden.

11. Filter nach einem der Ansprüche 1 bis 8, wobei ein Wasserauslauf (12) aus dem Filter seitlich am Gehäuse (1) angebaut ist.

12. Filter nach einem der Ansprüche 1 bis 11, wobei das Gehäuse (1) an seiner Oberseite einen Einlassstutzen (4) aufweist, mit dem der Filter an einem Wasserleitungsauslauf ein- oder aufschraubbar ist.
